# EUROPÄISCHE PATENTSCHRIFT

(11) **EP 2 173 644 B1**
(45) Veröffentlichungstag und Bekanntmachung des Hinweises auf die Patenterteilung: **30.09.2015**
(21) Anmeldenummer: 08784798.4
(22) Anmeldetag: 16.07.2008
(51) Int. Cl.: B65G 1/137

(54) **SYSTEM UND VERFAHREN ZUM HANDLING VON RETOURWAREN IN EINE KOMMISSIONIERANLAGE**
SYSTEM AND METHOD FOR HANDLING PRODUCTS RETURNED TO A COMMISSIONING SYSTEM
SYSTÈME ET PROCÉDÉ POUR MANIPULER DES MARCHANDISES DE RETOUR DANS UNE INSTALLATION DE PRÉPARATION DE COMMANDES

(30) Priorität: 18.07.2007 DE 102007034705
(43) Veröffentlichungstag der Anmeldung: 14.04.2010
(73) Patentinhaber: SSI Schäfer Peem GmbH, 8051 Graz (AT)
(72) Erfinder: SCHÄFER, Gerhard, 57290 Neunkirchen (DE)
(74) Vertreter: Witte, Weller & Partner Patentanwälte mbB
(86) Internationale Anmeldenummer: PCT/EP2008/005790
(87) Internationale Veröffentlichungsnummer: WO 2009/010274

(56) Entgegenhaltungen:
- EP-A- 0 934 778
- WO-A-2006/042347
- DE-A1- 10 340 143
- DE-U1- 20 112 328

## Beschreibung

Die vorliegende Erfindung betrifft ein Verfahren zum Einlagern von Retourwaren unterschiedlichster Warentypen in eine Kommissionieranlage.

Die vorliegende Erfindung betrifft ferner eine Kommissionieranlage zur Handhabung von Retourwaren unterschiedlichster Warentypen.

Systeme zur Handhabung von Retouren sind in der DE 198 38 319 B4, DE 103 40 143 A1, EP 0 934 778 A1 sowie der WO 2005/030615 offenbart.

Die DE 103 40 143 A1 offenbart ein Verfahren zum Kommissonieren von Artikeln aus Lagerbehältern in Auftragsbehälter, wobei die Lagerbehälter über eine Lagerbehälter-Förderstrecke zu einem Kommissionierplatz transportiert werden, die Artikel von einer Kommissionierperson in zu kommissionierende Auftragsbehälter kommissioniert werden, die über eine Auftragsbehälter-Förderstrecke vom Kommissionierplatz abtransportiert werden, und die Artikel in Auftragsbehälter eines Puffers für mehrere, zu kommissionierende Auftragsbehälter kommissioniert werden, wobei die Auftragsbehälter mittels eines Shuttles in den Puffer ein- und/oder ausgelagert werden. Das Verfahren kann in einer korrespondierenden Kommissionieranlage durchgeführt werden. Die Kommissionieranlage kann ferner auch dazu ausgebildet sein, so genannte Retouren wieder einzulagern. Zu diesem Zweck kann die Kommissionieranlage eine Einlagerungs-Förderstrecke aufweisen. Die Einlagerungs-Förderstrecke kann zusätzlich zu einer Auftragsbehälter-Förderstrecke und einer Lagerbehälter-Förderstrecke vorgesehen sein. Das Kommissionieren von Artikeln und das Erfassen von Retourwaren erfolgt bei der DE 103 40 143 A1 am selben Kommissionierarbeitsplatz.

Die EP 1 626 013 A1 offenbart ein Verfahren zum Zusammenstellen von Waren in einem Lager und zum Handhaben von Retourwaren. Dort wird insbesondere die Handhabung von sogenannten Langsamläufem erläutert, die an Arbeitsplätzen kommissioniert werden und über einen Sorter anschließend an Übergabepunkte verbracht werden, wo sie in Versandbehälter gepackt werden. Vollständig bepackte Versandbehälter werden in einen Versandbereich transportiert.

Die WO 2005/030615 zeigt im Wesentlichen eine Kommissionieranlage, die hauptsächlich in einem Kommissioniermodus betrieben wird. Dabei werden Artikel oder Waren aus einem Behälterlager in Lagerbehältern über eine Lagerbehälter-Fördertechnik zum Kommissionierplatz transportiert. Am Kommissionierplatz angelangt, werden die zu kommissionierenden Artikel entnommen und in sog. Kommissionierschächte gegeben, um von dort an sog. Auftragsbehälter abgegeben zu werden. Ein Auftragsbehälter stellt eine Art Sammelbehälter für alle Artikel dar, die zu einem Kommissionierauftrag gehören. Ein Kommissionierauftrag stellt üblicherweise eine Zusammenstellung von verschiedenen Artikeln bzw. Waren unterschiedlichster Anzahlen dar. Um einen Kommissionierauftrag abarbeiten zu können, werden die Lagerbehälter, die die zu kommissionierenden Artikel enthalten, mit der Lagerbehälter-Fördertechnik ausgelagert und anschließend über die Lagerbehälter-Fördertechnik auch wieder eingelagert. Die Auftragsbehälter werden über eine Auftragsbehälter-Fördertechnik zum Kommissionierplatz geliefert und von dort mit der Auftragsbehälter-Fördertechnik abtransportiert.

Die WO 2005/030615 offenbart des Weiteren eine (separate) Korrektur-Förderstrecke, die zum Zwecke einer nachträglichen Kommissionierung oder einer Einlagerung von Lagerbehältern benutzt werden kann.

Andere herkömmliche Systeme setzen sog. Sorter bzw. Sortiereinrichtungen ein, die eine Vielzahl von Zielstellen (z.B. 150) aufweisen. Jede Zielstelle kann einzeln angesteuert werden, so dass ein chaotischer Retourwarenstrom sortiert werden kann, indem z.B. Retourwaren eines gleichen Warentyps immer zu ein und derselben Zielstelle geleitet werden. Nachteilig bei diesem Stand der Technik ist die große Anzahl von Zielstellen, die einen entsprechend großen räumlichen Platzbedarf bedingt.

Es ist daher eine Aufgabe der vorliegenden Erfindung, eine kompakte Kommissionieranlage zur Handhabung von Retourwaren vorzusehen. Insbesondere sind ergonomische Gesichtspunkte zu beachten. Vorzugsweise soll eine herkömmliche Kommissionieranlage durch möglichst wenige und platzsparende Baumaßnahmen zur Handhabung von Retourenwagen umgerüstet werden können.

Diese Aufgabe wird durch das Verfahren der eingangs erwähnten Art gelöst, wobei die Kommissionieranlage ein Behälterlager zur Bereitstellung einer Vielzahl von Lagerbehältern und zumindest einen Arbeitsplatz umfasst, an dem in einem Retourniermodus Retourwaren in die Lagerbehälter aus dem Behälterlager abgegeben werden, mit den folgenden Schritten: Bereitstellen von zumindest einer Retourware eines ersten Warentyps an einem Aufgabeplatz; Erfassen jeder Retourware und, vorzugsweise vereinzelndes, Abgeben der Retourware an eine Retourwaren-Fördertechnik, die die Retourwaren zum Arbeitsplatz befördert; Identifizieren des Warentyps jeder erfassten Retourware; Identifizieren eines Lagerbehälters, dem der jeweils identifizierte Warentyp zugeordnet ist; Auslagern des jeweils zugeordneten Lagerbehälters aus dem Behälterlager und Fördern dieses Lagerbehälters zum Arbeitsplatz, während die Retourwaren vom Aufgabeplatz zum Arbeitsplatz transportiert werden; und am Arbeitsplatz Abgeben der Retourwaren an die ihnen jeweils zugeordneten Lagerbehälter.

Diese Aufgabe wird ferner durch eine Kommissionieranlage der eingangs erwähnten Art gelöst, die folgende Merkmale aufweist: eine Kommissionieranlage zur Bereitstellung einer Vielzahl von Lagerbehältern; zumindest einen Arbeitsplatz; zumindest einen Aufgabeplatz mit einer Erfassungseinrichtung, wo Retourwaren bereitgestellt und erfasst werden; eine Retourwaren-Fördertechnik zum Befördern von Retourwaren vom Aufgabeplatz zum Arbeitsplatz; eine Lagerbehälter-Fördertechnik, um Lagerbehälter zum Arbeitsplatz zu befördern; und ein Lagerverwaltungssystem, das in einem Retourniermodus geeignet ist, erfasste Retourwaren hinsichtlich ihres Warentyps zu identifizieren, um einen zum identifizierten Warentyp zugehörigen Lagerbehälter aus dem Behälterlager auszulagern und zum Arbeitsplatz zu befördern, während die Retourwaren vom Aufgabeplatz zum Arbeitsplatz transportiert werden, wo die identifizierten Retourwaren in den zugehörigen Lagerbehälter abgegeben werden.

Gemäß der vorliegenden Erfindung wird eine Rücksendung von Retourwaren, die eine Vielzahl von unterschiedlichen Warentypen enthalten kann, an einem Aufgabeplatz ausgepackt, eingescannt und auf die Retourwaren-Fördertechnik abgegeben, um die Retourware zu einem Arbeitsplatz zu befördern. Am Aufgabeplatz werden Retourwaren datentechnisch mit einem zugehörigen Lagerbehälter verknüpft. Während die Retourwaren zum Arbeitsplatz transportiert werden, werden die zugehörigen Lagerbehälter ausgelagert, und zwar vorzugsweise in der Reihenfolge, wie die Retourwaren auf die Retourwaren-Fördertechnik gegeben, und somit zum Arbeitsplatz befördert, werden. Am Arbeitsplatz muss sich ein Arbeiter also lediglich darum kümmern, dass die Retourwaren in die richtigen Lagerbehälter gegeben werden. Auf diese Weise kann viel Zeit eingespart werden im Vergleich zu einer Situation, wenn die Retourwaren erst am Arbeitsplatz ausgepackt und identifiziert würden. Dann wäre zusätzlich eine entsprechende Zeit erforderlich, bis die zugehörigen Lagerbehälter aus dem Behälterlager geholt werden könnten.

Am Arbeitsplatz läuft somit ein Lagerbehälterstrom, vorzugsweise synchronisiert, mit einem Retourwarenstrom zusammen.

Es ist möglich, lediglich eine einzige Zielstelle im Sinne des oben erwähnten Stands der Technik vorzusehen. Dies führt zur erheblichen Platzeinsparung.

Alternativ kann ein existierender Kommissionierplatz umgerüstet werden, indem am Arbeitsplatz eine zusätzliche Retourwaren-Fördertechnik installiert wird oder indem eine bereits existierende Lagerbehälter-Fördertechnik entsprechend umgerüstet wird.

Wenn als Behälterlager zumindest ein horizontal umlaufendes Behälterregal, wie z.B. ein Karussell, eingesetzt wird, bekommt man im Bereich des Behälterlagers eine sehr große Dynamik, die unter Umständen erforderlich ist, um Lagerbehälter in sehr kurzer Zeit sequenziert auszulagern. Ein horizontal umlaufendes Behälterregal stellt eine erste Sequenzierungsstufe dar.

Gemäß einer bevorzugten Ausführungsform wird eine Länge und/oder eine Transportgeschwindigkeit der Retourwaren-Fördertechnik zum Arbeitsplatz derart gewählt, dass ausreichend Zeit zum Sequenzieren der auszulagernden Lagerbehälter vorhanden ist.

Gemäß einer weiteren Ausgestaltung wird beim Erfassen zusätzlich auch eine Anzahl der auf die Retourwaren-Fördertechnik abgegebenen Retouren des gleichen Warentyps erfasst.

Diese Information kann abgespeichert werden, um jederzeit einen aktuellen Lagerbestand abrufen zu können. Eine Zusammenfassung gleicher Retourwaren beim Auspacken verringert die Anzahl der Lagerbehälterspiele und verkürzt die Zeit zum Rücklagern von Retourwaren.

Werden Menschen zum Auflösen einer Rücksendung von Retourwaren eingesetzt, können diese Retourwaren eines gleichen Typs aus der Vielzahl von verschiedenen Retourwaren herausholen und eine Gruppe von Retourwaren des gleichen Typs auf die Retourwaren-Fördertechnik geben. Diese Vorgehensweise hat den Vorteil, dass der zu diesem Warentyp zugeordnete Lagerbehälter nicht mehrmals für ein und dieselbe Rücksendung aus dem Behälterlager ausgelagert und zum Arbeitsplatz transportiert werden muss.

Weiter ist es von Vorteil, wenn der Arbeitsplatz in einem Kommissioniermodus zum Kommissionieren von Waren aus den Lagerbehältern in Auftragsbehälter eingesetzt wird.

Der Arbeitsplatz kann somit in einem Doppelmodus betrieben werden. Beispielsweise könnte morgens retourniert und abends kommissioniert werden.

Ferner ist es von Vorteil, wenn eine Lagerbehälter-Fördertechnik zwischen dem zumindest einen Arbeitsplatz und dem Behälterlager zum Anliefern und Abtransportieren von Lagerbehältern vorgesehen wird, und eine Auftragsbehälter-Fördertechnik zum Anliefern und Abtransportieren von Auftragsbehältern zum bzw. vom Arbeitsplatz vorgesehen wird, die vorzugsweise zumindest im Bereich des Arbeitsplatzes tiefer als die Lagerbehälter-Fördertechnik angeordnet ist.

Gemäß einer weiteren Ausführungsform wird die Lagerbehälter-Fördertechnik als Retourwaren-Fördertechnik eingesetzt und im Retourniermodus in umgekehrter Richtung im Vergleich zum Kommissioniermodus betrieben.

Auf diese Weise muss für den Transport der Retourwaren keine zusätzliche Fördertechnik vorgesehen werden, so dass Kosten eingespart werden können, was die Anschaffung einer derartigen Kommissionieranlage betrifft.

Gemäß einer weiteren besonderen Ausgestaltung der Anlage ist der Aufgabeplatz an die Lagerbehälter-Fördertechnik angekoppelt.

Auf diese Weise kann der oben beschriebene Effekt erzielt werden.

Auch ist es von Vorteil wenn die Retourwaren-Fördertechnik eine relativ zur Lagerbehälter-Fördertechnik separate Fördertechnik darstellt.

So ist es möglich, dass Retourwaren automatisiert in Lagerbehälter gegeben werden können. In diesem Fall kann der Arbeitsplatz gleichzeitig im Kommissioniermodus und im Retourniermodus betrieben werden, da die Lagerbehälter-Fördertechnik nicht zum Transport der Retourwaren benötigt wird.

Besonders bevorzugt ist es, wenn die Retourwaren-Fördertechnik an jedem Arbeitsplatz eine Übergabestelle aufweist, wo die Retourwaren in die zugeordneten Lagerbehälter von insbesondere oben nach unten abgegeben werden können.

Eine Abgabe von oben nach unten erleichtert zum einen eine automatisierte Abgabe, insbesondere bei sog. "dropable" Artikeln. Zum anderen erhöht dies die Ergonomie, wenn die Retourwaren manuell in Auftragsbehälter gegeben werden müssen.

Auch ist es von Vorteil, wenn ferner eine Auftragsbehälter-Fördertechnik vorgesehen ist, auf der im Wesentlichen Auftragsbehälter befördert werden, wenn die Anlage in einem Kommissioniermodus betrieben wird, und auf der im Retourniermodus im Wesentlichen zugeordnete Lagerbehälter befördert werden.

In diesem Fall kann die Lagerbehälter-Fördertechnik zum Transportieren der Retourwaren benutzt werden.

Zusätzlich kann die Retourwaren-Fördertechnik eine Retourwaren-Sequenziereinrichtung umfassen. Alternativ oder zusätzlich kann auch die für die Beförderung der zugeordneten Lagerbehälter im Retourniermodus vorgesehene Fördertechnik eine Lagerbehälter-Sequenziereinrichtung umfassen.

Mit diesen Maßnahmen erhöht sich die Wahrscheinlichkeit, dass der richtige Lagerbehälter zum richtigen Zeitpunkt an der Übergabestelle ist, bzw. dass sich die Retourware zum richtigen Zeitpunkt am richtigen Ort befindet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Kommissionieranlage gemäß der vorliegenden Erfindung;
- Fig. 2: eine Abwandlung der Kommissionieranlage der Fig. 1;
- Fig. 3: eine Detailansicht eines Arbeitsplatzes gemäß der vorliegenden Erfindung;
- Fig. 4: eine Abwandlung des Arbeitsplatzes der Fig. 3;
- Fig. 5: eine weitere Ausführungsform einer Kommissionieranlage gemäß der vorliegenden Erfindung;
- Fig. 6: ein Flussdiagramm des erfindungsgemäßen Verfahrens; und
- Fig. 7: einen Arbeitsplatz mit kombinierten Kommissionierplatz.

In der nachfolgenden Beschreibung werden gleiche Elemente mit den gleichen Bezugszeichen versehen werden. Eine Kommissionieranlage gemäß der vorliegenden Erfindung ist allgemein mit 10 bezeichnet.

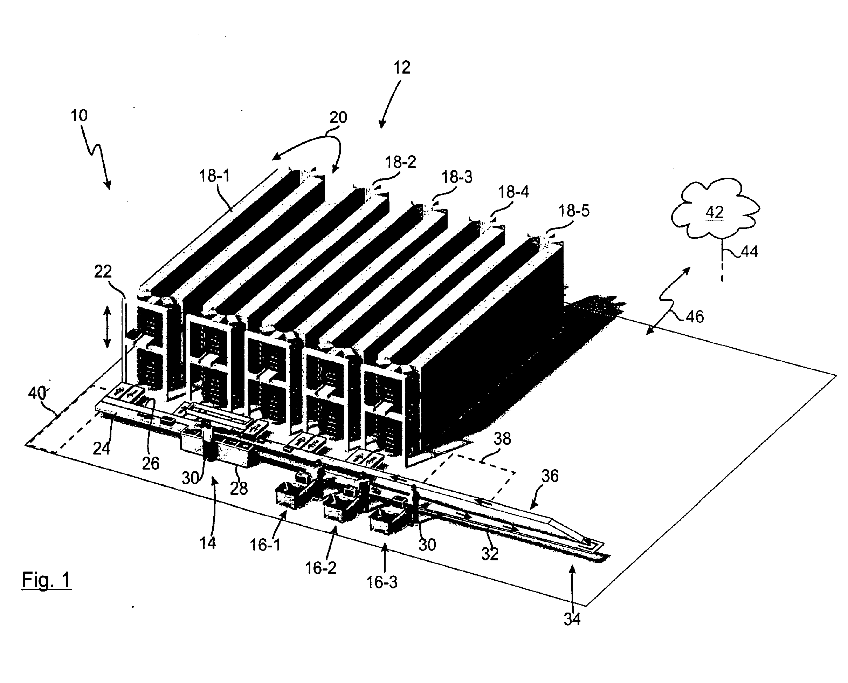

Fig. 1 zeigt eine schematische perspektivische Ansicht einer Kommissionieranlage 10 gemäß der vorliegenden Erfindung.

Die Kommissionieranlage 10 weist ein Behälterlager 12 auf. Es versteht, dass die vorliegende Erfindung nicht nur für Behälter als Lagereinheit, sondern auch für jede andere Art von Ladehilfsmittel (z.B. Tablare, Paletten, usw.) geeignet ist.

Ferner sind in Fig. 1 exemplarisch ein Arbeitsplatz 14 und drei Aufgabeplätze 16-1, 16-2 und 16-3 gezeigt. An den Aufgabeplätzen 16 werden Retourwaren in das System eingespeist. Am Arbeitsplatz 14 werden die Retourwaren in hier nicht näher bezeichnete Lagerbehälter gegeben (automatisiert und/oder manuell), die zuvor aus dem Behälterlager 12 ausgelagert wurden und nach einer Beschickung mit einer Retourware in das Behälterlager 12 zurückgelagert werden.

Das Behälterlager 12 weist z.B. eine Vielzahl von horizontal verfahrbaren Regalen 18-1 bis 18-5 auf, die auch als Karusselle bekannt sind. Alternativ könnten auch andere Regalsysteme, wie z.B. ein AKL (Automatisches Kleinteillager), verwendet werden. Die Karusselle 18 sind jeweils in beiden Richtungen verfahrbar, wie es durch ein Doppelpfeil 20 verdeutlicht ist. An einer Stirnseite der Karusselle 18 ist jeweils ein Vertikallift 22 vorgesehen, der Lagerbehälter aus dem Karussell an eine Lagerbehälter-Fördertechnik 24, 26 abgibt bzw. von dieser aufnimmt.

Die Lagerbehälter-Fördertechnik 24 dient zum Transport von Lagerbehältern zum Arbeitsplatz 14 und bildet vorzugsweise mit der Lagerbehälter-Fördertechnik 26, die für die Rückführung von mit Retourwaren beschickten Lagerbehältern verantwortlich ist, eine Fördertechnikschleife. Solche Fördertechnikschleifen können Ein- und/oder Ausschleusvörrichtungen aufweisen, um den Weg eines Lagerbehälters abzukürzen, so dass dieser nicht zwingend die komplette Schleife durchlaufen muss, um wieder in ein vorbestimmtes Regalfach des Karussells 18 zurückbefördert zu werden.

Der Arbeitsplatz 14 der Fig. 1 weist ferner optional einen Lagerbehälter-Puffer 28 auf, in dem mehrere Lagerbehälter geparkt werden können, bis eine ihnen zugeordnete Retourware an sie abgegeben werden kann. Dies kann manuell durch eine Bedienperson 30 geschehen. Es ist jedoch auch möglich, die Retourwaren automatisiert an die Lagerbehälter abzugeben, wie es nachfolgend noch detaillierter beschrieben werden wird. In diesem Fall kommt der Arbeitsplatz 14 mehr einem Übergabepunkt gleich, da kein Kommissionierer 30 am Arbeitsplatz 14 benötigt wird.

Auch die Aufgabeplätze 16 werden im Beispiel der Fig. 1 manuell durch Bedienpersonen 30 betrieben. Alternativ könnten die Aufgabeplätze 16 auch automatisiert betrieben werden.

Die Aufgabeplätze 16 weisen z.B. eine Arbeitsfläche auf, auf der Rücksendungen, wie z.B. Pakete, die Retourwaren enthalten, geöffnet werden können. Die Bedienperson 30 entnimmt die Retourwaren und erfasst den jeweiligen Warentyp. Dies kann z.B. mit einem Scanner oder einer Strichcodeleseeinrichtung (nicht dargestellt) erfolgen. Wenn eine Retourware erfasst wurde, kann die Bedienperson 30 diese an eine Retourwaren-Fördertechnik 32 abgeben. Eine Transportrichtung der Retourwaren ist mit Pfeilen angedeutet. Die exemplarische Retourwaren-Fördertechnik 32 ist hier z.B. in ergonomischer Hüfthöhe der Bedienperson 30 angeordnet. Besonders schwere Retourwaren können auch direkt von der Arbeitsfläche auf die Fördertechnik 32 geschoben werden. Die Retourwaren-Fördertechnik 32 entfernt sich hier exemplarisch zuerst vom Arbeitsplatz 14 und den Aufgabeplätzen 16, um in einem Wendebereich 34 auf einen höher liegenden Teil 36 umgelenkt zu werden, so dass die Retourwaren vorzugsweise in Brusthöhe am Ort des Arbeitsplatzes 14 angeliefert werden. Die Streckenführung ist frei wählbar. Eine Anlieferung in Brusthöhe erhöht die Ergonomie für die Bedienperson 30 am Arbeitsplatz 14. Die Bedienperson 30 muss eine Retourware dann, wenn überhaupt, nur nach unten in einen Lagerbehälter geben.

Die Retourwaren-Fördertechnik 32 kann optional eine Retourwaren-Sequenziereinrichtung 38 aufweisen, die in Fig. 1 durch eine gestrichelte Linie angedeutet ist. Auch die Lagerbehälter-Fördertechnik 24, 26 kann eine optionale Lagerbehälter-Sequenziereinrichtung 40 aufweisen.

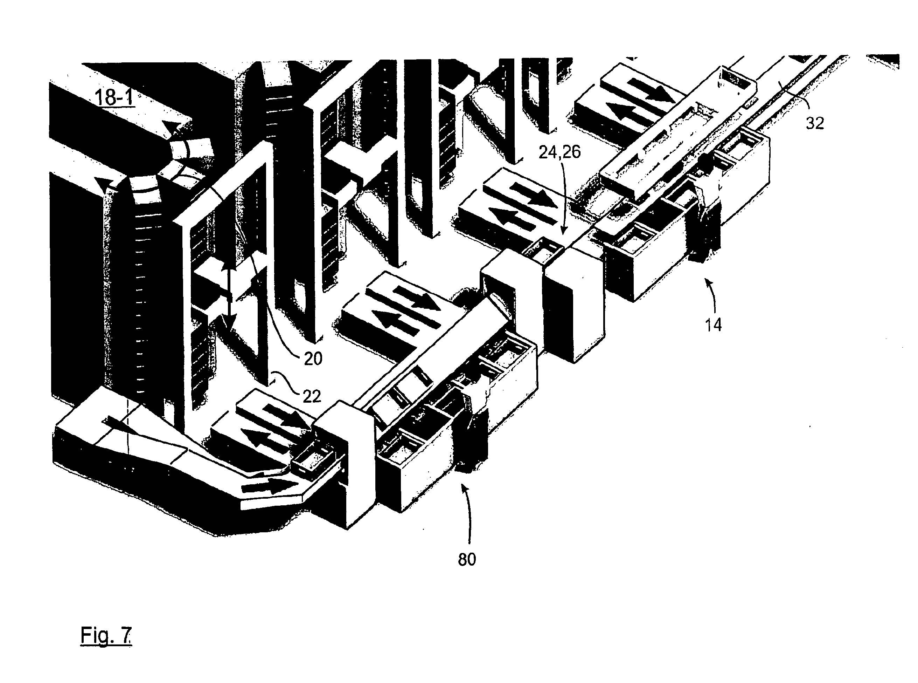

Es versteht sich, dass als Arbeitsplatz 14 ein Kommissionierplatz eingesetzt werden kann, wie er in der deutschen Patentanmeldung DE 10 204 001 841 von der Firma SSI Schäfer Peem offenbart ist (vgl. auch Fig. 7). Der Aufbau eines Kommissionierplatzes ist dort explizit beschrieben, so dass hier explizit Bezug auf die eben genannte Patentanmeldung genommen wird.

In der vorliegenden Fig. 1 kann die Retourwaren-Fördertechnik 32 durch die Lagerbehälter-Fördertechnik des bekannten Kommissionierplatzes realisiert werden, wobei die hier gezeigten Aufgabeplätze 16 an die herkömmliche Lagerbehälter-Fördertechnik angekoppelt werden. Die Lagerbehälter-Fördertechnik wird dann in umgekehrter Richtung betrieben. Anstatt Auftragsbehälter zu füllen, werden dann Lagerbehälter gefüllt, die wiederum auf der herkömmlichen Auftragsbehälter-Fördertechnik zum Kommissionierplatz transportiert werden.

Alternativ kann der herkömmliche Kommissionierplatz eingesetzt werden, wobei zusätzlich die Retourwaren-Fördertechnik 32 in den Arbeitsbereich des Kommissionierplatzes hineingeführt wird, so dass dann eine Auftragsbehälter-Fördertechnik, eine Lagerbehälter-Fördertechnik und eine Retourwaren-Fördertechnik in den Bereich des Kommissionierplatzes führen bzw. aus diesem herausführen.

Einige oder alle Elemente der vorliegenden Kommissionieranlage 10 werden durch einen übergeordneten Lagerverwaltungsrechner 42 koordiniert und angesteuert. Der Lagerverwaltungsrechner 42 umfasst insbesondere Materialflussrechner (nicht dargestellt). Eine Kommunikation mit den verschiedenen Komponenten erfolgt entweder über feste Leitungen 44 und/oder drahtlose Verbindungen 46.

An den Aufgabeplätzen 16 erfassten Warentypen der jeweiligen Retourwaren werden an den Lagerverwaltungsrechner 42 übermittelt. Dieser sucht einen Lagerbehälter im Behälterlager 12, dem diese Retourware zugeordnet wird. Die Retourware und der Lagerbehälter werden an dieser Stelle datentechnisch miteinander "verheiratet". Alle weiteren Aktionen sollten so geplant werden, dass, wenn die Retourware am Arbeitsplatz 14 ankommt, auch der zugeordnete Lagerbehälter entweder bereits dort schon angekommen ist oder gleichzeitig dort ankommt. Kommt der Lagerbehälter zu früh an, so kann er in den Lagerbehälter-Puffer 28 eingelagert werden und auf die Ankunft der ihm zugeordneten Retourware warten.

Natürlich könnten auch andere Regale als Karusselle bzw. umlaufende Regale 18 verwendet werden. Die Verwendung von horizontal umlaufenden Regalen 18 ist jedoch von Vorteil, da diese bereits eine erste Sequenzierungsstufe darstellen. Der Lagerverwaltungsrechner 42 wählt vorzugsweise einen Lagerbehälter aus, der am nächsten zu dem Vertikallift 22 angeordnet ist, um die Wege möglichst kurz zu halten. Ergänzend sei bemerkt, dass ein Artikelspektrum üblicherweise mehrmals im Behälterlager abgebildet ist. Eine zweite Sequenzierungsstufe stellt dann die Auswahl eines der Karusselle 18; 1 - 18-5 dar.

Die optionalen Sequenziereinrichtungen 38 und 40 stellen eine dritte bzw. vierte Sequenzierungsstufe dar.

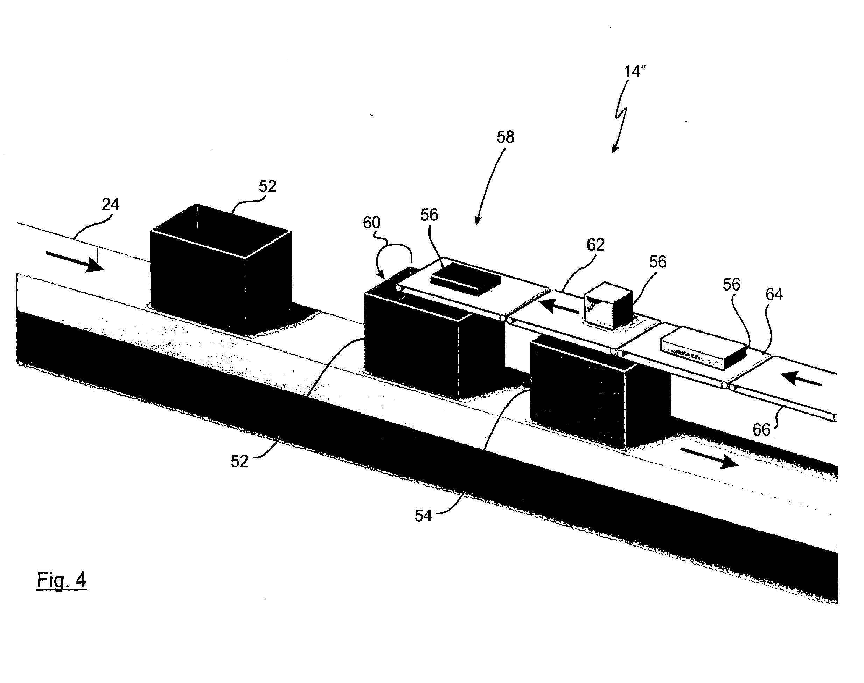

Es versteht sich, dass die Länge und Transportgeschwindigkeit der Retourwaren-Fördertechnik 32 Einfluss darauf haben, wie schnell die Retourwaren, nachdem sie erfasst, identifiziert und zugeordnet wurden, zum Arbeitsplatz 14 gelangen. Wenn sehr viel verschiedene Retourwaren gleichzeitig abgearbeitet werden müssen, ist es empfehlenswert, die Länge ausreichend groß und die Transportgeschwindigkeit relativ gering zu halten, um es dem Lagerverwaltungsrechner 42 zu ermöglichen, den richtigen Lagerbehälter rechtzeitig aus dem Behälterlager 12 zum Arbeitsplatz 14 zu bringen. Der Lagerverwaltungsrechner 42 bzw. untergeordnete Materialflussrechner (nicht dargestellt) kann auch dafür genutzt werden, um einen Verbleib von Lagerbehältern am Arbeitsplatz 14 oder in der Nähe des Übergabepunkts (Fig. 4) zu optimieren. Wenn die Steuerung "weiß", dass z.B. die übernächste Retourware vom selben Typ ist und den selben Lagerbehälter benötigt, so verbleibt dieser am Arbeitsplatz oder zumindest in (unmittelbarer) Nähe.

Vorzugsweise ist die Retourwaren-Fördertechnik 32 in hintereinander gereihte Abschnitte bzw. datentechnische Fenster (nicht dargestellt) aufgeteilt, in die hinein eine identifizierte Retourware oder Gruppe eines gleichen Warentyps gegeben werden kann. Als Fördertechnik können z.B. Rollenförderer oder Gurtbänder eingesetzt werden, die vorzugsweise segmentiert sind.

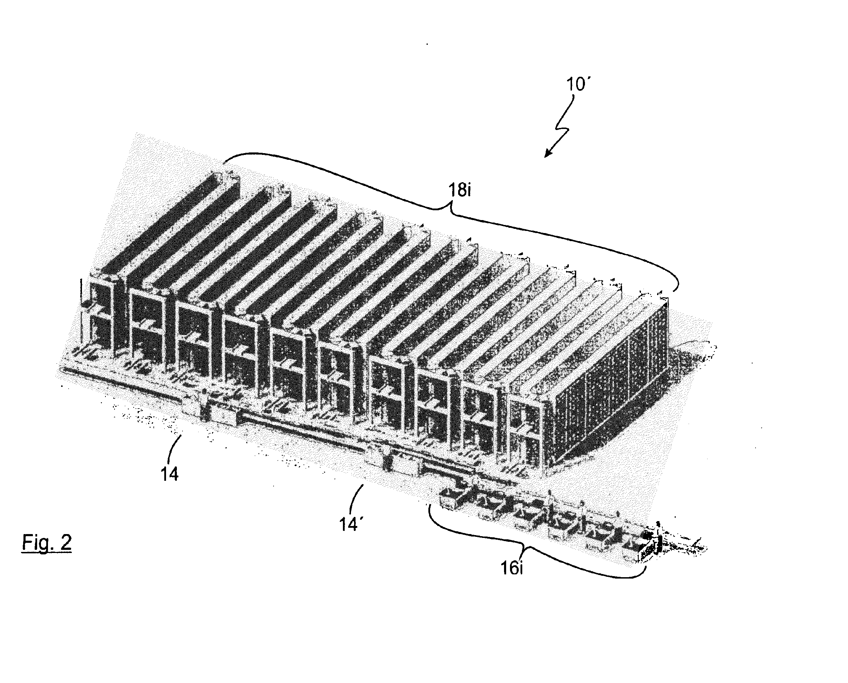

In Fig. 2 ist eine weitere Ausführungsform einer Kommissionieranlage 10' gezeigt, die sich nur unwesentlich von der Kommissionieranlage 10 der Fig. 1 unterscheidet. Die Kommissionieranlage 10' der Fig. 2 weist noch mehr Karusselle 18i auf. Außerdem ist ein weiterer Arbeitsplatz 14' vorgesehen, der wiederum eine weitere Sequenzierungsstufe darstellt. Auch sind mehrere Aufgabeplätze 16i gezeigt.

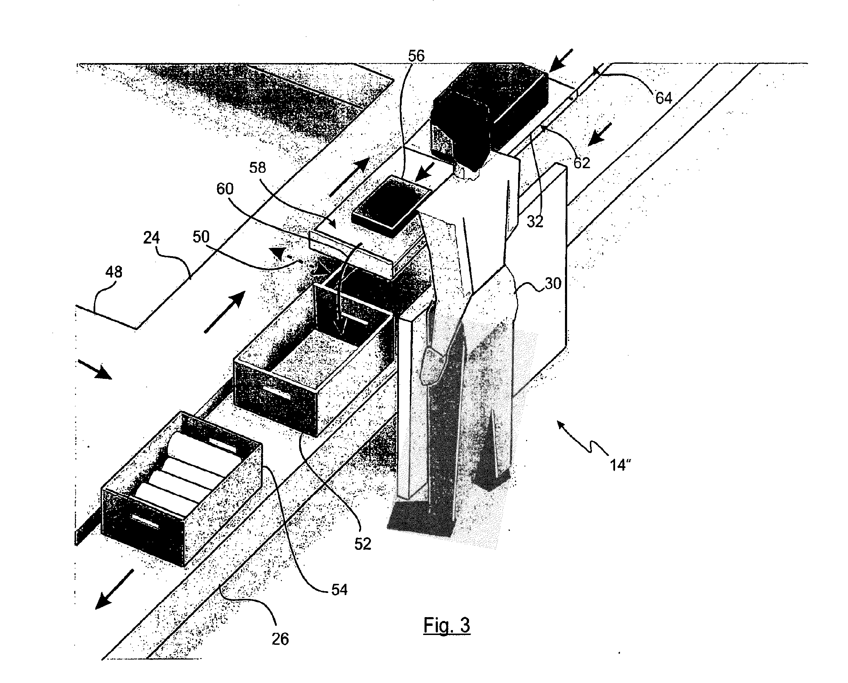

Bezug nehmend auf Fig. 3 ist eine Detailansicht eines Arbeitsplatzes 14" gezeigt.

In einer unteren Höhe sind die Lagerbehälter-Fördertechniken 24, 26 angeordnet. Die Transportrichtungen sind durch Pfeile angedeutet. Ein- und/oder Ausschleusvorrichtungen 50 können vorgesehen sein, um leere Lagerbehälter 52 zwischen den Fördertechniken 24 und 26 auszutauschen. Ein bereits mit Retourware befüllter Lagerbehälter 54 ist ebenfalls gezeigt.

Die Retourwaren-Fördertechnik 32 ist vorzugsweise auf einem höheren Niveau als die Fördertechniken 24, 26 angeordnet, insbesondere auf Brusthöhe der Bedienperson 30 (Ergonomie). Unterschiedlichste Retourwaren 56 werden zur Bedienperson 30 transportiert, wie es durch Pfeile angedeutet ist. Direkt vor der Bedienperson 30 ist eine Übergabestelle 58 vorgesehen, wo die Bedienperson 30 die Retourware 56 nehmen und in Richtung des Pfeils 60 nach unten in den leeren, bereits wartenden Auftragsbehälter 52 geben kann.

Die Retourwaren-Fördertechnik 32 weist hier mehrere segmentierte Gurtbänder 62, 64 auf.

Bezug nehmend auf Fig. 4 ist eine Abwandlung des Arbeitsplatzes 14" der Fig. 3 gezeigt. Der Arbeitsplatz 14"' der Fig. 4 ist vollautomatisiert. Das Tätigwerden und die Anwesenheit einer Bedienperson 30 ist nicht zwingend erforderlich. Die Retourwaren 56 werden über die verschiedenen Förderbändersegmente 62 bis 66 zur Übergabestelle 58 befördert, wo sie in bereitstehende leere Lagerbehälter 54 fallengelassen werden. Es versteht, dass es sich bei den Retourwaren 56 dann um Waren des Typs "dropable" handeln muss. Aber auch Waren des so genannten Typs "non-dropable" können durch geeignete zusätzlich Einführhilfen automatisiert gehandhabt werden.

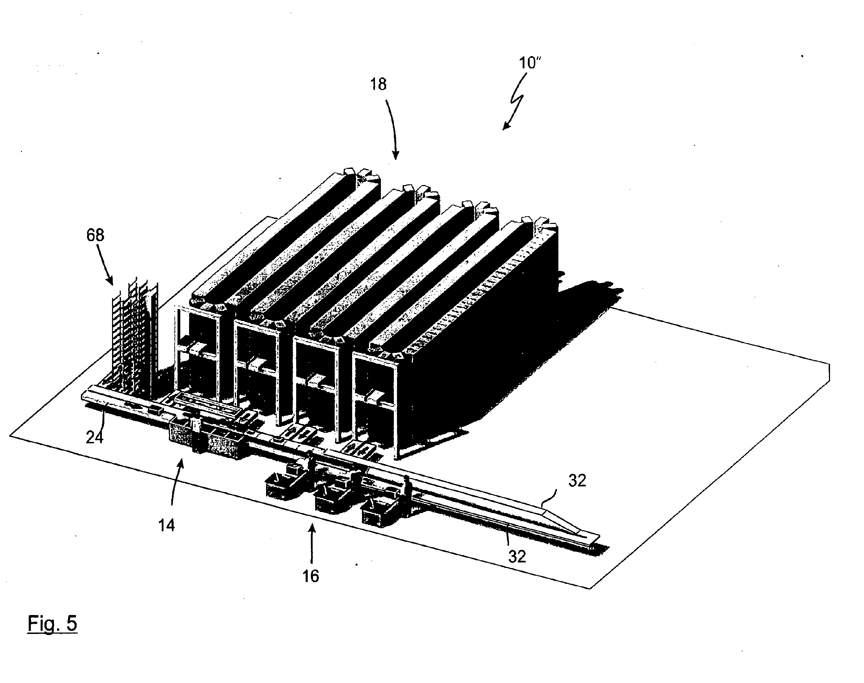

Bezug nehmend auf Fig. 5 ist eine weitere Ausbildung einer Kommissionieranlage 10" gezeigt.

Die Kommissionieranlage 10" ist ähnlich wie die Kommissionieranlage 10 der Fig. 1 aufgebaut, weist jedoch zusätzlich ein sog. Schnelläufer-Regal 68 auf. In diesem Regal 68 werden Lagerbehälter gelagert, die besonders häufig zur Einlagerung von Retourwaren benötigt werden.

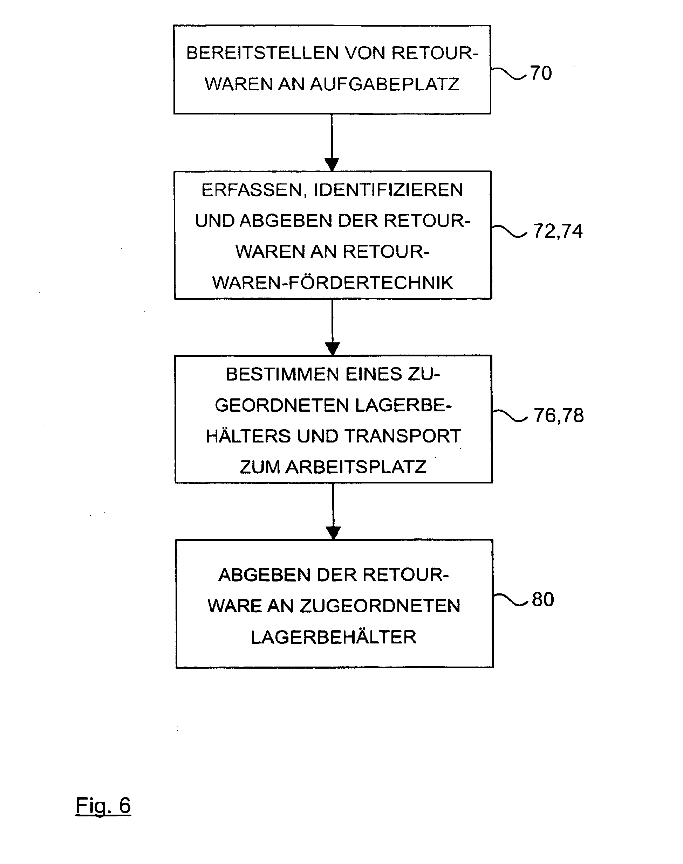

Bezug nehmend auf Fig. 6 ist das erfindungsgemäße Verfahren stark vereinfacht dargestellt.

In einem ersten Schritt werden Retourwaren eines ersten Warentyps an einem Aufgabeplatz bereitgestellt (vgl. Block 70) in einem zweiten Schritt (Block 72) wird jede Retourware erfasst und vorzugsweise vereinzelt an die Retourwaren-Fördertechnik abgegeben. In einem Schritt 74 werden die erfassten Warentypen identifiziert. Anschließend wird ein Lagerbehälter bestimmt (vgl. Block 76), der normalerweise den identifizierten Warentyp enthält bzw. den der identifizierte Warentyp zugeordnet ist.

In einem weiteren Schritt 78 wird dieser zugeordnete Lagerbehälter aus dem Behälterlager ausgelagert und zum Arbeitsplatz transportiert. In einem Schritt 80 wird die erfasste und identifizierte Retourware an den zugeordneten Lagerbehälter abgegeben.

Es versteht sich, dass die Erfassungseinrichtung zum Erfassen der Retourwaren nicht zwingend am Aufgabeplatz angeordnet sein muss. Zwar haben sich Scanner und Barcodelesegeräte als vorteilhaft erwiesen. Jedoch wäre es auch möglich, automatisierte Erkennungsgeräte zu verwenden, die vorzugsweise in unmittelbarer Nähe zum Aufgabeplatz angeordnet sind. Bei diesen automatisierten Erkennungsgeräten könnte es sich z.B. um Kameras handeln, die ihr Signal an den übergeordneten Lagerverwaltungsrechner weiterleiten, d.h. die Bilder von der Fördertechnik zur Auswertung weiterleiten.

Fig. 7 zeigt abschließend einen Arbeitsplatz 14 und einen Kommissionierplatz 80 mit schräg gestellter Fördertechnik zum Antransport von Lagerbehältern zum Kommissionierplatz, um Artikel zu entnehmen und diese in Auftragsbehälter zu geben. Sowohl der Kommissionierplatz 80 als auch der Arbeitsplatz 14 werden von der Lagerbehälter-Fördertechnik 24, 26 mit vollen bzw. leeren Lagerbehältern versorgt.

## Patentansprüche

1. Verfahren zum Einlagern von Retourwaren (56) unterschiedlichster Warentypen in einer Kommissionieranlage (10), wobei die Kommissionieranlage (10) ein Behälterlager (12) zur Bereitstellung einer Vielzahl von Lagerbehältern (52, 54) und zumindest einen Arbeitsplatz (14) umfasst, an dem in einem Retourniermodus Retourwaren (56) in die Lagerbehälter (52) aus dem Behälterlager (12) abgegeben werden, mit den folgenden Schritten:
Bereitstellen (70) von zumindest einer Retourware (56) eines ersten Warentyps an einem Aufgabeplatz (16);
Erfassen (72) jeder Retourware (56) und, vorzugsweise vereinzelndes, Abgeben der Retourware (56) an eine Retourwaren-Fördertechnik (32), die die Retourwaren (56) zum Arbeitsplatz (14) befördert;
Identifizieren (74) des Warentyps jeder erfassten Retourware (56);
Identifizieren (76) eines Lagerbehälters (52), dem der jeweils identifizierte Warentyp zugeordnet ist;
Auslagern (78) des jeweils zugeordneten Lagerbehälters (52) aus dem Behälterlager (12) und Fördern dieses Lagerbehälters (52) zum Arbeitsplatz (14) während die Retourwaren (56) vom Aufgabeplatz (16) zum Arbeitsplatz (14) transportiert werden; und
am Arbeitsplatz (14) Abgeben (80) der Retourware (56) an den zugeordneten Lagerbehälter (52).

2. Verfahren nach Anspruch 1, wobei die Lagerbehälter (54) nach erfolgter Abgabe der Retourware (56) ins Behälterlager (12) rückgelagert werden.

3. Verfahren nach Anspruch 1 oder 2, wobei als Behälterlager (12) zumindest ein horizontal umlaufendes Behälterregal (18-1 bis 18-5; 18) eingesetzt wird.

4. Verfahren nach einem der vorhergehenden Ansprüche, wobei eine Länge oder Transportgeschwindigkeit der Retourwaren-Fördertechnik (32) zum Arbeitsplatz (14) derart gewählt wird, dass ausreichend Zeit zum Sequenzieren der auszulagernden Lagerbehälter (52) vorhanden ist.

5. Verfahren nach einem der vorhergehenden Ansprüche, wobei beim Erfassen zusätzlich auch eine Anzahl der auf die Retourwaren-Fördertechnik (32) abgegeben Retouren (56) des gleichen Warentyps erfasst wird.

6. Verfahren nach einem der vorhergehenden Ansprüche, wobei der Arbeitsplatz in einem Kommissioniermodus zum Kommissionieren von Waren aus den Lagerbehältern (54) in Auftragsbehälter eingesetzt wird.

7. Verfahren nach einem der vorhergehenden Ansprüche, mit den weiteren Schritten:
Vorsehen einer Lagerbehälter-Fördertechnik (24, 26) zwischen dem zumindest einen Arbeitsplatz (14) und dem Behälterlager (12) zum Anliefern und Abtransportieren von Lagerbehältern;
Vorsehen einer Auftragbehälter-Fördertechnik (24, 26) zum Anliefern und Abtransportieren von Auftragsbehältern zum bzw. vom Arbeitsplatz (14), die vorzugsweise zumindest im Bereich des Arbeitsplatzes (14) tiefer als die Lagerbehälter-Fördertechnik (24, 26) angeordnet ist;

8. Verfahren nach Anspruch 7, wobei die Lagerbehälter-Fördertechnik als Retouren-Fördertechnik (32) eingesetzt wird und im Retourniermodus in umgekehrter Richtung im Vergleich zum Kommissioniermodus betrieben wird.

9. Kommissionieranlage (10) zur Handhabung von Retourwaren (56) unterschiedlichster Warentypen mit:
einem Behälterlager (12) zur Bereitstellung einer Vielzahl von Lagerbehältern (52, 54);
zumindest einem Arbeitsplatz (14);
zumindest einem Aufgabeplatz (16) mit einer Erfassungseinrichtung, wo Retourwaren (56) bereitgestellt und erfasst werden;
einer Retourwaren-Fördertechnik (32) zum Befördern von Retourwaren (56) vom Aufgabeplatz (16) zum Arbeitsplatz (14);
einer Lagerbehälter-Fördertechnik (24, 26), um Lagerbehälter (52, 54) zum Arbeitsplatz (14) zu befördern; und
einem Lagerverwaltungssystem (42), das in einem Retourniermodus geeignet ist, erfasste Retourwaren (56) hinsichtlich ihres Warentyps zu identifizieren, um einen zum identifizierten Warentyp zugehörigen Lagerbehälter (52) aus dem Behälterlager (12) auszulagern und zum Arbeitsplatz (14) zu befördern, während die Retourwaren (56) vom Aufgabeplatz (16) zum Arbeitsplatz (14) transportiert werden, wo die identifizierten Retourwaren (56) in den zugehörigen Lagerbehälter (52) abgegeben werden.

10. Anlage nach Anspruch 9, wobei der Aufgabeplatz (16) an die Lagerbehälter-Fördertechnik angekoppelt ist, die im Retourniermodus als Retourwaren-Fördertechnik (32) eingesetzt wird, wobei eine Förderrichtung dann im Vergleich zu einem Kommissioniermodus umgekehrt ist.

11. Anlage nach Anspruch 9, wobei die Retourwaren-Fördertechnik (32) eine relativ zur Lagerbehälter-Fördertechnik (24, 26) separate Fördertechnik darstellt.

12. Anlage nach Anspruch 11, wobei die Retourwaren-Fördertechnik (32) an jedem Arbeitsplatz (14) eine Übergabestelle (58) aufweist, wo die Retourwaren (56) in die zugeordneten Lagerbehälter (52) von oben nach unten abgegeben werden können.

13. Anlage nach einem der Ansprüche 9 bis 12, die ferner eine Auftragsbehälter-Förderstrecke aufweist, auf der im Wesentlichen Auftragsbehälter befördert werden, wenn die Anlage in einem Kommissioniermodus betrieben wird, und auf der im Retourniermodus im Wesentlichen zugeordnete Lagerbehälter (52) befördert werden.

14. Anlage nach einem der Ansprüche 9 bis 13, wobei die Retourwaren-Fördertechnik (32) eine Retourwaren-Sequenziereinrichtung (38) umfasst.

15. Anlage nach einem der Ansprüche 9 bis 14, wobei die für die Beförderung der zugeordneten Lagerbehälter (52) im Retourniermodus vorgesehene Fördertechnik (24) eine Lagerbehälter-Sequenziereinrichtung (40) umfasst.

## Claims

1. A method for storing returned goods (56) of different types of goods in an order-picking system (10), wherein the order-picking system (10) comprises a container warehouse (12) for providing a plurality of storage containers (52, 54), and at least one workstation (14) at which the returned goods (56) are delivered, in a return mode, in the storage containers (52) from the container warehouse (12), the method comprising the following steps:
providing (70) at least one returned good (56) of a first type of goods at a delivering station (16);
detecting (72) each of the returned goods (56) and, preferably separately, delivering the returned goods (56) to a returned-goods conveyor (32) conveying the returned goods (56) to the workstation (14);
identifying (74) the type of goods of each of the detected returned goods (56);
identifying (76) a storage container (52) with which the respectively identified type of goods is associated;
retrieving (78) the respectively associated storage container (52) from the container warehouse (12), and conveying this storage container (52) to the workstation (14) while the returned goods (56) are transported from the delivering station (16) to the workstation (14); and
delivering (80) the returned goods (56), at the workstation (14), to the associated storage container (52).

2. The method of claim 1, wherein the storage containers (54) are stored back into the container warehouse (12) after a completed delivery of the returned goods (56).

3. The method of claim 1 or 2, wherein at least one horizontally rotating container rack (18-1 through 18-5; 18) is used as the container warehouse (12).

4. The method of any of the proceeding claims, wherein a length or transporting velocity of the returned-goods conveyor (32) towards the workstation (14) is selected such that there is sufficient time for sequencing the to-be-retrieved storage containers (52).

5. The method of any of the proceeding claims, wherein, during the step of detecting, additionally a number of returned goods (56) of the same type of goods, which is delivered to the returned-goods conveyor (32), is detected as well.

6. The method of any of the preceding claims, wherein the workstation, in a picking mode, is used for picking goods from the storage containers (54) into order containers.

7. The method of any of the preceding claims, comprising the additional steps:
providing a storage-container conveyor (24, 26) between the at least one workstation (14) and the container warehouse (12) for supplying and transporting away storage containers;
providing an order-container conveyor (24, 26) for delivering and transporting away order containers to and from the workstation (14), which is arranged, preferably at least in the region of the workstation (14), lower than the storage-container conveyor (24, 26).

8. The method of claim 7, wherein the storage-container conveyor is used as returned-goods conveyor (32), and in the return mode the storage-container conveyor is operated in an opposite direction in comparison to the picking mode.

9. An order-picking system (10) for handling returned goods (56) of different types of goods comprising:
a container warehouse (12) for providing a plurality of storage containers (52, 54);
at least one workstation (14);
at least one delivery station (16) having a detecting device, where returned goods (56) are provided and detected;
a returned-goods conveyor (32) for conveying returned goods (56) from the delivery station (16) to the workstation (14);
a storage-container conveyor (24, 26) for conveying storage containers (52, 54) to the workstation (14); and
a warehouse-management system (42) which is suitable, in a return mode, to identify detected returned goods (56) with respect to the type of goods thereof, in order to retrieve storage containers (52), which are associated with the identified type of goods, from the container warehouse (12), and convey them to the workstation (14), where the identified returned goods (56) are delivered to the associated storage containers (52).

10. The system of claim 9, wherein the delivery station (16) is coupled to the storage-container conveyor, which in the return mode is used as the returned-goods conveyor (32), wherein in this case a conveying direction is inversed in comparison to a picking mode.

11. The system of claim 9, wherein the returned-goods conveyor (32) represents a separate conveyor relative to the storage-container conveyor (24, 26).

12. The system of claim 11, wherein the returned-goods conveyor (32) comprises a handing-over location (58) at each of the workstations (14), where the returned goods (56) can be delivered from the top to the bottom into the associated storage containers (52).

13. The system of any of the claims 9 to 12, further comprising an order-container conveyor, on which substantially order containers are conveyed, if the system is operated in a picking mode, and on which, in the return mode, substantially associated storage containers (52) are conveyed.

14. The system of any of the claims 9 to 13, wherein the returned-goods conveyor (32) comprises a returned-goods sequencing device (38).

15. The system of any of the claims 9 to 14, wherein the conveyor (24), which is provided for the conveyance of the associated storage containers (52) in the return mode, comprises a storage-container sequencing device (40).

## Revendications

1. Procédé pour manipuler des marchandises de retour (56) de types très différents dans une installation de préparation de commandes (10), dans lequel l'installation de préparation de commandes (10) comprend un magasin de conteneurs (12) pour la mise à disposition d'une multiplicité de conteneurs de stockage (52, 54) et au moins un poste de travail (14), auquel des marchandises de retour (56) en mode de retour sont déposées dans les conteneurs de stockage (52) provenant du magasin de conteneurs (12), comprenant les étapes suivantes:
mise à disposition (70) d'au moins une marchandise de retour (56) d'un premier type à un poste de remise (16);
détection (72) de chaque marchandise de retour (56) et remise, de préférence individuellement, de la marchandise de retour (56) à un système de transport de marchandises de retour (32), qui transporte les marchandises de retour (56) jusqu'au poste de travail (14);
identification (74) du type de marchandise de chaque marchandise de retour détectée (56);
identification (76) d'un conteneur de stockage (52), auquel le type de marchandises respectivement identifié est associé;
extraction (78) du conteneur de stockage respectivement associé (52) hors du magasin de conteneurs (12) et transport de ce conteneur de stockage (52) jusqu'au poste de travail (14) pendant que les marchandises de retour (56) sont transportées du poste de remise (16) au poste de travail (14); et
au poste de travail (14), dépôt (80) des marchandises de retour (56) dans le conteneur de stockage associé (52).

2. Procédé selon la revendication 1, dans lequel les conteneurs de stockage (54) sont remis en place dans le magasin de conteneurs (12) après le dépôt de la marchandise de retour (56).

3. Procédé selon la revendication 1 ou 2, dans lequel on utilise comme magasin de conteneurs (12) au moins un rayonnage de conteneurs (18-1 à 18-5; 18) défilant horizontalement.

4. Procédé selon l'une quelconque des revendications précédentes, dans lequel on choisit une longueur ou une vitesse de transport du système de transport des marchandises de retour (32) jusqu'au poste de travail (14), de telle manière que l'on dispose d'un temps suffisant pour séquencer les conteneurs de stockage (52) à extraire.

5. Procédé selon l'une quelconque des revendications précédentes, dans lequel lors de la détection on détecte en outre aussi un nombre des retours (56) du même type de marchandise déposés sur le système de transport de marchandises de retour (32).

6. Procédé selon l'une quelconque des revendications précédentes, dans lequel le poste de travail est utilisé dans un mode de préparation de commandes pour la préparation de marchandises hors des conteneurs de stockage (54) dans des conteneurs de livraison.

7. Procédé selon l'une quelconque des revendications précédentes, comprenant les autres étapes suivantes:
prévoir un système de transport de conteneurs de stockage (24, 26) entre ledit au moins un poste de travail (14) et le magasin de conteneurs (12) pour l'amenée et l'enlèvement de conteneurs de stockage;
prévoir un système de transport de conteneurs de livraison (24, 26) pour l'amenée et l'enlèvement de conteneurs de livraison vers ou à partir du poste de travail (14), qui est disposé plus profondément que le système de transport de conteneurs de stockage (24, 26) de préférence au moins dans la région du poste de travail (14).

8. Procédé selon la revendication 7, dans lequel le système de transport de conteneurs de stockage est utilisé comme système de transport de retours (32) et fonctionne en mode de retour en sens inverse par rapport au mode de préparation de commandes.

9. Installation de préparation de commandes (10) pour manipuler des marchandises de retour (56) de types très différents, avec:
un magasin de conteneurs (12) pour la mise à disposition d'une multiplicité de conteneurs de stockage (52, 54);
au moins un poste de travail (14);
au moins un poste de remise (16) avec un dispositif de détection, où des marchandises de retour (56) sont présentées et détectées;
un système de transport de marchandises de retour (32) pour le transport de marchandises de retour (56) du poste de remise (16) au poste de travail (14);
un système de transport de conteneurs de stockage (24, 26), pour transporter des conteneurs de stockage (52, 54) jusqu'au poste de travail (14); et
un système de gestion du magasin (42), qui convient, dans un mode de retour, pour identifier des marchandises de retour détectées (56) en ce qui concerne leur type de marchandise, pour extraire un conteneur de stockage (52) correspondant au type de marchandise identifié hors du magasin de conteneurs (12) et le transporter jusqu'au poste de travail (14), pendant que les marchandises de retour (56) sont transportées du poste de remise (16) au poste de travail (14), où les marchandises de retour identifiées (56) sont déposées dans le conteneur de stockage correspondant (52).

10. Installation selon la revendication 9, dans laquelle le poste de remise (16) est couplé au système de transport de conteneurs de stockage, qui est utilisé en mode de retour comme système de transport de marchandises de retour (32), dans laquelle la direction de transport est alors inversée par rapport à un mode de préparation de commandes.

11. Installation selon la revendication 9, dans laquelle le système de transport de marchandises de retour (32) représente un système de transport distinct du système de transport de conteneurs de stockage (24, 26).

12. Installation selon la revendication 11, dans laquelle le système de transport de marchandises de retour (32) présente à chaque poste de travail (14) une zone de transfert (58), où les marchandises de retour (56) peuvent être déposées de haut en bas dans le conteneur de stockage associé (52).

13. Installation selon l'une quelconque des revendications 9 à 12, qui présente en outre une section de transport de conteneurs de livraison, sur laquelle on transporte essentiellement des conteneurs de livraison, lorsque l'installation fonctionne dans un mode de préparation de commandes, et sur lequel on transporte en mode de retour essentiellement des conteneurs de stockage associés (52).

14. Installation selon l'une quelconque des revendications 9 à 13, dans laquelle le système de transport de marchandises de retour (32) comprend un dispositif de séquençage de marchandises de retour (38).

15. Installation selon l'une quelconque des revendications 9 à 14, dans laquelle le système de transport (24) prévu pour le transport des conteneurs de stockage associés (52) en mode de retour comprend un dispositif de séquençage de conteneurs de stockage (40).
